# EUROPÄISCHE PATENTANMELDUNG

(11) **EP 2 982 463 A2**
(43) Veröffentlichungstag der Anmeldung: **10.02.2016**
(21) Anmeldenummer: 15002218.4
(22) Anmeldetag: 27.07.2015
(51) Int. Cl.: B22F 3/105, B22F 3/24, B22F 5/00

(54) **VERFAHREN ZUM HERSTELLEN VON STANZWERKZEUGEN MITTELS EINER 3D-DRUCKVORRICHTUNG**

(30) Priorität: 28.07.2014 DE 102014110632
(71) Anmelder: WINK Stanzwerkzeuge GmbH & Co. KG, 49828 Neuenhaus (DE)
(72) Erfinder: de Natris, Albertus, 48531 Nordhorn (DE)
(74) Vertreter: Wischmeyer, André

(57) **Zusammenfassung**

Verfahren zum Herstellen von Stanzwerkzeugen (4) in Form von Stanzblechen und/oder Stanzzylindern für eine Stanzvorrichtung, wobei das Stanzwerkzeug (4) einen Grundkörper (5) und auf diesem befindliche Stanz- oder Schneidlinien (6) aufweist, wobei das Stanzwerkzeug (4) zumindest teilweise mittels einer 3D-Druckvorrichtung (2) hergestellt wird.

## Beschreibung

Die vorliegende Erfindung betrifft ein Verfahren zum Herstellen von Stanzwerkzeugen in Form von Stanzblechen und/oder Stanzzylindern für eine Stanzvorrichtung, wobei das Stanzwerkzeug einen Grundkörper und auf diesem befindliche Stanz- oder Schneidlinien aufweist.

Bei der Herstellung von Stanzblechen werden zuerst Rohbleche, die üblicherweise aus Federstahl bestehen, mit einem trockenen Photoresist laminiert. Anschließend werden die laminierten Rohbleche durch ein Vorbelichtungsverfahren maskiert. Je nach Layout werden unterschiedliche Konturen in Form von geschlossenen und offenen Linien belichtet und das Photoresist wird im Bereich der belichteten Konturen polymerisiert. Nach der Belichtung erfolgt die Entwicklung über ein Auswaschen des nicht polymerisierten Teils des Photoresists mit einer Lauge. Anschließend sind auf der Stahloberfläche nur noch die ausgehärteten, polymerisierten Konturen, die durch den Belichtungsprozess entstanden sind, vorhanden. Die Polymerlinien sind säureresistent, während die freie Oberfläche des Rohblechs mit säurehaltigen Flüssigkeiten reagiert. Alternativ kann auch in einem Direkt-UV-Druckverfahren das Rohblech gedruckt werden, wobei die UV-Farbe gleichzeitig mit dem Farbauftrag oder nach dem Farbauftrag mit UV-Licht vollständig ausgehärtet wird. Auf dem Rohblech werden so die Konturen der Schneid- oder Stanzlinien ohne die vorbeschriebene Entwicklung mittels Lauge direkt ausgebildet. Auch der verwendete UV-Lack ist säurebeständig und das bedruckte Stanzblech kann so dem Ätzprozess zugeführt werden. Bei beiden Variantenwerden im anschließenden Ätzprozess die Stahlbleche mit den säureresistenten Konturen mit Fe₃Cl angesprüht. Hierbei wird mit einem Druck von bis zu 3 Bar und einer Temperatur zwischen 45 und 50°C gearbeitet. Die freien Oberflächen werden nach und nach chemisch abgetragen. Je nach Abätztiefe laufen die Stanzbleche unterschiedlich lang durch die Ätzkammer. Anschließend wird das Rohblech ausgewaschen. In Originalhöhe sind nur noch die rohen Stanz- oder Schneidkonturen vorhanden. Diese erhabenen Konturen werden in einem nachgelagerten Produktionsprozess maschinell mittels einer Graviervorrichtung abgenommen. Dabei entstehen die notwendigen Stanz- oder Schneidlinien. Die notwendigen Toleranzen werden durch die Graviertechnik bestimmt. Alternativ werden die Toleranzen durch rückseitiges Schleifen der Stanzbleche erreicht.

Bei der Herstellung von Stanzzylindern wird je nach Ausbildung des Zylinders, der links und rechts mit einem Zapfen versehen ist, auf einem der Zapfen oft ein Zahnrad für den Zapfen montiert. Der Umfang der Mantelfläche des Stanzzylinders ist je nach Ausführung der geforderten Abrolllänge variabel. Die Ausbildung der Zapfen ist abhängig vom Druck- oder Stanzmaschinentyp, in dem der vorzugsweise als Rotationsstanzzylinder ausgebildete Stanzzylinder eingesetzt werden soll. Darüber hinaus können an der axialen Außenseite der Mantelfläche Laufringe (sogenannte Schmitzringe) aus dem Material ausgebildet werden oder als zusätzliche Bauteile montiert werden. Auf der Manteloberfläche sind Stanz- oder Schneidlinien aus dem Zylinder ausgearbeitet. Die Schneidlinien sind je nach Anwendung und zu stanzendem/schneidendem Material unterschiedlich in der Tiefe und in der Geometrie. Die Konturen der Schneidlinien sind offene oder geschlossene Konturen und bilden die Umrandung des späteren Stanzgutes. Alternativ kann der Stanzzylinder auch mit einer glatten äußeren Mantelfläche versehen sein, auf dass dann üblicherweise über Magnete ein Stanzblech gehaltenwird.

Zur Herstellung der Stanzzylinder wird zunächst ein Rundstahl im passenden Durchmesser in der geforderten Länge, jeweils mit einem gewissen Aufmaß, abgesägt. Der gesägte Rohling wird anschließend auf einer Drehmaschine bearbeitet. Dabei werden die Zapfen, ggf. die Laufringe und die Stanzkonturenzone ausgearbeitet.

Nachdem die Laufringe und die Stanzkonturenzone auf der Außenrundschleifmaschine auf den geforderten Durchmesser geschliffen worden sind, werden die Konturen der Stanz- oder Schneidelinien mittels einer Fräsmaschine aus der Stanzkonturenzone herausgefräst. Die endgültigen Stanz- oder Schneidlinien können hierbei direkt ausgebildet werden oder nachgelagert auf einer separaten Fräsmaschine hergestellt werden.

Die Verfahren zur Stanzwerkzeugherstellung weisen eine große Anzahl an Bearbeitungsschritten auf. Sie sind entsprechend aufwendig und durch den Einsatz von ätzenden Materialien unter Umweltgesichtspunkten kritisch. Darüber hinaus ist eine umfangreiche Maschinentechnik vorzuhalten, die wiederum entsprechende Kosten verursacht.

Es ist Aufgabe der vorliegenden Erfindung, das Verfahren zur Herstellung von Stanzwerkzeugen in Form von Stanzblechen und/oder Stanzzylindern zu vereinfachen.

Erfindungsgemäß ist es vorgesehen, dass das Stanzwerkzeug mittels einer 3D-Druckvorrichtung hergestellt wird. Ungeachtet der im Stand der Technik bekannten Anwendungsmöglichkeiten von 3D-Druckern und zugehörigen Verfahren ist man bislang davon ausgegangen, dass sich eine solche Technik nicht für die Anwendung bei Stanzwerkzeugen eignet. Vielmehr sind die Anforderungen an die Qualität der Stanzbleche insbesondere hinsichtlich deren Verformung und Haltbarkeit so hoch, dass bislang von einer Verwendung von 3D-Druckern bzw. 3D-Druckvorrichtungen abgesehen wurde.

Überraschenderweise konnte nun allerdings gezeigt werden, dass sich auch 3D-Drucktechniken zur Herstellung von Stanzblechen eignen.

Vorzugsweise wird das Stanzwerkzeug mittels einer selektiven Laserschmelze hergestellt. Hierbei wird der zu verarbeitende Werkstoff in Pulverform aufgebracht und mittels Laserstrahlung lokal vollständig umgeschmolzen zwecks Ausbildung einer festen Materialschicht. Die hierbei eingehaltene Höhentoleranz beträgt +/- 10 µm, wobei der Wert von der Unterseite des Grundkörpers (insbesondere des Grundbleches) bis zur Schneid- oder Stanzlinienspitze gemessen wird.

Durch mehrfaches Pulverauftragen und Schmelzen werden sukzessive entsprechende Schichten aufgetragen.

Alternativ kann das Stanzwerkzeug auch mittels Lasersintern hergestellt werden, insbesondere durch selektives Lasersintern. Auch hier wird das Werkstück Schicht für Schicht aufgebaut, wobei das Pulver auf einer Plattform mit Hilfe einer Walze oder einer Rackels vollflächig in einer Dicke von 0,001 bis 0,2 mm aufgebracht und durch Ansteuern eines Laserstrahls, vorzugsweise eines CO₂-, eines Nd:YAG- oder eines Faserlasers, gesintert oder eingeschmolzen. Die Energie, die hierbei vom Laser zugeführt wird, wird vom Pulver absorbiert und führt zu einem lokal begrenzten Sintern, welches zur Herstellung der Schneidlinien bzw. Stanzlinien bzw. deren Rohkonturen führt. Um einer Verformung des Grundkörpers bzw. des Stanzwerkzeuges im Allgemeinen zu verhindern, werden vorzugsweise gepulste Laser verwendet.

Insbesondere können sowohl der Grundkörper als auch die Stanz- oder auch Schneidlinien mittels 3D-Drucktechnik hergestellt werden. Für Stanzwerkzeuge in Form von Stanzblechen werden vorzugsweise Größen zwischen 1 cm x 10 cm bis hin zu 120 cm x 100 cm in beliebigen äußeren Konturen hergestellt.

Anstelle der kompletten Ausbildung des Stanzwerkzeuges können auch vorgefertigte Grundkörper wie zum Beispiel ein Roh- bzw. Grundblech einer Dicke von 0,08 bis 0,25 mm oder ein Grundzylinder (ohne Schneid- oder Stanzlinien, mit ggf. Laufringen und Zahnrädern) verwendet werden, auf denen dann die Stanz- bzw. Schneidkonturen aufgebracht werden.

Vorteilhafterweise werden auf einem bereits bestehenden Grundkörper die Stanz- oder Schneidlinien mittels 3D-Drucktechnik aufgebracht. Hierbei kommt insbesondere die vorbezeichnete Höhentoleranz von +/- 10 µ zum Tragen, wobei die Stanz- und/oder Schneidlinien sowohl bei Stanzblechen wie auch bei Stanzzylindern aufgebracht werden.

Bei einer weiteren erfindungsgemäßen Ausführung werden auch Zapfen, Laufringe und/oder Zahnräder des Grundkörpers mittels 3D-Drucktechnik hergestellt. Die Anzahl der Bearbeitungsschritte wird hierdurch stark reduziert.

In einem ggf. ergänzenden Schritt eines erfindungsgemäßen Verfahrens können auf oder mit dem Grundkörper des Stanzwerkzeuges erzeugte Rohkonturen der Stanz- oder Schneidlinien zur Herstellung der Stanz- oder Schneidlinien anschließend graviert werden. Hierdurch können ggf. im Verlaufe des 3D-Hersetlungsprozesses noch prozeßbedingt vorhandene Toleranzen ausgeglichen werden, wodurch herkömmliche und aktuelle Methoden miteinander kombiniert werden.

Insbesondere ist es von Vorteil, wenn das Stanzwerkzeug in einer Maschinenstraße umfassend eine 3D-Druckvorrichtung und eine Gravieranlage nach Vorgabe zugehöriger elektronischer Stanzwerkzeugdaten automatisiert erzeugt wird. Hierbei können insbesondere über eine elektronische Schnittstelle, beispielsweise über eine Webinterface, etwaige Kundendaten Online aufgenommen, mittels entsprechender EDV-Mittel umgewandelt und der Herstellungsprozess des Stanzwerkzeugs quasi automatisiert gestartet und durchgeführt werden.

Weitere Vorteile und Einzelheiten der Erfindung sind der nachfolgenden Figurenbeschreibung mit einem erfindungsgemäßen Ausführungsbeispiel zu entnehmen.

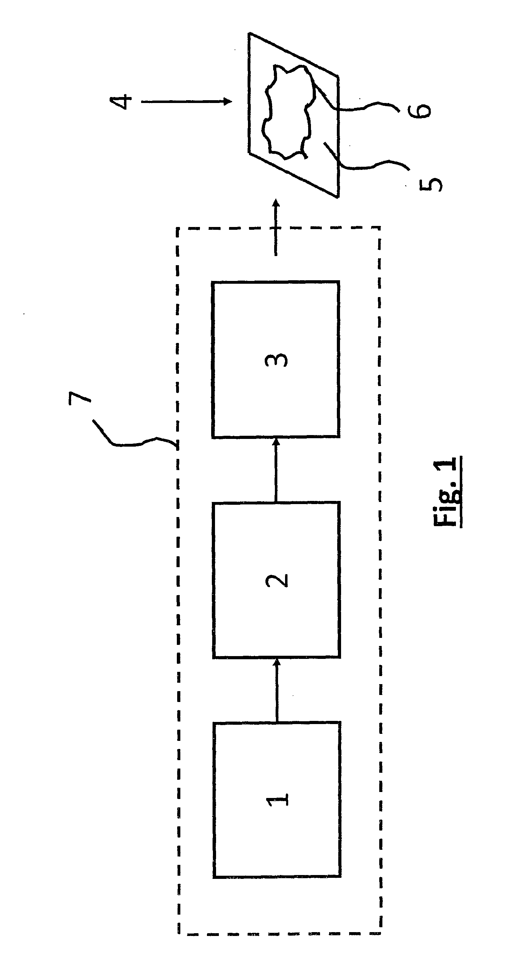

In der Fig. 1 ist schematisch der Ablauf der Stanzwerkzeug-Herstellung gezeigt, Ausgehend von einer Dateneingabe in ein EDV-Mittel 1 werden 3D-Druckdaten erzeugt und an eine 3D-Druckvorrichtung 2 übertragen. Diese erzeugt auf herkömmliche Weise bei einem Stahlhersteller konfektionierten bzw. endlos hergestellten Rohblechen, welches beispielsweise von einer 600 mm breiten Rolle entnommen werden, Rohkonturen der Stanz- bzw. Schneidlinien. Anschließend werden die mit den Rohkonturen versehenen Stanzbleche in einem weiteren vorzugsweise automatisierten Arbeitsschritt einer Gravieranlage 3 zur Schärfung der Stanz- bzw. Schneidlinien zugeführt. Anschließend kann ein Stanzblech 4 mit Grundkörper 5 und Stanz- bzw. Schneidlinien 6 entnommen werden. Eine aus den EDV-Mitteln 1, der 3D-Druckvorrichtung 2 und der Gravieranlage 3 zusammengesetzte Maschinenstraße 7 baut deutlich einfacher und kleiner als die im Stand der Technik sonst zur Herstellung von Stanzblechen verwendete Kombination von Vorrichtungen.

## Patentansprüche

1. Verfahren zum Herstellen von Stanzwerkzeugen (4) in Form von Stanzblechen und/oder Stanzzylindern für eine Stanzvorrichtung, wobei das Stanzwerkzeug (4) einen Grundkörper (5) und auf diesem befindliche Stanz- oder Schneidlinien (6) aufweist, **dadurch gekennzeichnet, dass** das Stanzwerkzeug (4) zumindest teilweise mittels einer 3D-Druckvorrichtung (2) hergestellt wird.

2. Verfahren nach Anspruch 1, **dadurch gekennzeichnet, dass** das Stanzwerkzeug (4) mittels selektiven Laserschmelzens hergestellt wird.

3. Verfahren nach Anspruch 1 oder 2, **dadurch gekennzeichnet, dass** das Stanzwerkzeug (4) mittels Lasersintern hergestellt wird.

4. Verfahren nach einem der vorherigen Ansprüche, **dadurch gekennzeichnet, dass** der zur Herstellung des Stanzwerkzeuges (4) verwendete Laser gepulst ist.

5. Verfahren nach einem der vorherigen Ansprüche, **dadurch gekennzeichnet, dass** sowohl der Grundkörper (5) als auch die Stanz- oder Schneidlinien (6) mittels 3D-Drucktechnik hergestellt werden.

6. Verfahren nach Anspruch 5, **dadurch gekennzeichnet, dass** Zapfen, Laufringe und/oder Zahnräder des Grundkörpers (5) mittels 3D-Drucktechnik hergestellt werden.

7. Verfahren nach einem der vorherigen Ansprüche, **dadurch gekennzeichnet, dass** auf einem bereits bestehenden Grundkörper (5) die Stanz- und/oder Schneidlinien (6) mittels 3D-Drucktechnik aufgebracht werden.

8. Verfahren nach einem der vorherigen Ansprüche, **dadurch gekennzeichnet, dass** auf oder mit dem Grundkörper (5) des Stanzwerkzeuges (4) Rohkonturen der Stanz- oder Schneidlinien (6) erzeugt werden, die zur Herstellung der Stanz- oder Schneidlinien (6) anschließend graviert werden.

9. Verfahren nach einem der vorherigen Anschlüsse, **dadurch gekennzeichnet, dass** das Stanzwerkzeug (4) in einer Maschinenstraße (7) umfassend die 3D-Druckvorrichtung (2) und eine Gravieranlage (3) nach Vorgabe zugehöriger elektronischer Stanzwerkzeugdaten automatisiert erzeugt wird
